# EUROPEAN PATENT APPLICATION

(11) **EP 4 066 707 A1**
(43) Date of publication of application: **05.10.2022**
(21) Application number: 20892093.4
(22) Date of filing: 27.11.2020
(51) Int. Cl.: A47J 43/24, A47J 43/07

(54) **CLEANING CUP FOR FOOD PROCESSOR, AND FOOD PROCESSOR**

(30) Priority: 29.11.2019 CN 201922112995 U
(71) Applicant: Zhejiang Shaoxing Supor Domestic Electrical Appliance Co., Ltd., Shaoxing, Zhejiang 312017 (CN)
(72) Inventor: YANG, Baobin, Shaoxing, Zhejiang 312017 (CN)
(74) Representative: LLR
(86) International application number: PCT/CN2020/132099
(87) International publication number: WO 2021/104420

(57) **Abstract**

A cleaning cup (12) of a food processor (10) and the food processor (10). The cleaning cup (12) comprises: a cup body (120); a rotating basket (122), rotatably arranged in the cup body (120) and used for receiving food materials, water outlet holes (122a) being provided on an outer wall of the rotating basket (122); and a limit ring (124) fixed relative to the cup body (120), the limit ring (124) comprising a top limit portion (124a) and a lateral limit portion (124b), the top limit portion (124a) limiting the movement amount when the rotating basket (122) moves upwards, and the lateral limit portion (124b) limiting the movement amount when the rotating basket (122) moves left and right. Said solution can reduce the movement amount of the rotating basket (122) caused by a centrifugal force, so as to ensure the dewatering effect of the rotating basket (122) and reduce the residual moisture in the cleaned food materials.

## Description

### Technical Field

The present invention relates to the technical field of electrical home appliances, and in particular, to a cleaning cup of a food processor and a food processor.

### Background

As the quality of life improves, people rely more and more on machines. Some simple and burdensome work can be done by machines such as a food processor. Existing food processors do not provide a function of cleaning vegetables, which limit the utility of such food processors.

### Invention

The present invention provides a cleaning cup of a food processor and a food processor capable of conveniently cleaning vegetables.

Specifically, the present invention is achieved by providing a cleaning cup of a food processor, comprising:
- a cup body;
- a rotating basket rotatably arranged in the cup body and used for receiving food materials, water outlet holes being provided on an outer wall of the rotating basket; and
- a limit ring fixed relative to the cup body, the limit ring comprising a top limit portion and a lateral limit portion, the top limit portion limiting the movement amount when the rotating basket moves upwards, and the lateral limit portion limiting the movement amount when the rotating basket moves left and right. Providing the limit ring can reduce the vertical and lateral movement amount of the rotating basket caused by a centrifugal force, so that the rotating basket stably rotates around a rotary axe, thereby improving the dewatering effect and reducing the residual moisture in the cleaned food materials.

According to an embodiment of the present invention, at least one of the top limit portion and the lateral limit portion comprises a protrusion that limits the position of the rotating basket by contact. The protrusion can reduce the area of contact of the top limit portion or the lateral limit portion with the rotating basket, and thus can reduce the friction and increase the effective work of motor.

According to an embodiment of the present invention, the limit ring comprises an inner ring and an outer ring fixed together, and a sphere clamped between the inner ring and the outer ring, the inner ring being provided with a through hole through which the sphere protrudes, thus forming the protrusion. In this solution, on one hand, the limit ring is provided as a multi-part structure wherein the sphere is clamped between the inner ring and the outer ring by the assembly of the inner ring and the outer ring, reducing the difficulty of mounting the sphere; on the other hand, the contact between the sphere and the rotating basket is a point-contact, further reducing the area of contact and thus reducing the friction.

According to an embodiment of the present invention, the outer ring further comprises a depression directly facing the through hole, the depression and the through hole together forming an accommodating chamber that accommodates the sphere. The depression can ensure the stability of the sphere while being clamped and prevent the sphere from disengaging from the clamped position.

According to an embodiment of the present invention, the sphere is clearance fitted to the accommodating chamber. In this way, the degree of freedom of the sphere is increased, and the contact between the sphere and the rotating basket is changed from a sliding friction to a rolling friction, so as to further reduce the friction upon contact.

According to an embodiment of the present invention, the limit ring further comprises a positioning structure by means of which the inner ring and the outer ring are positioning fitted. The positioning structure can ensure the correct mounting position between the inner ring and the outer ring and ensure that the depression and the through hole directly face each other.

According to an embodiment of the present invention, the positioning structure comprises a boss located on one of the inner ring and the outer ring and a slot located on the other of the inner ring and the outer ring, the boss being inserted into the slot. The positioning structure is of a simple structure and ensures a reliable positioning.

According to an embodiment of the present invention, the cleaning cup further comprises a cup cover that covers an opening of the cup body, the limit ring being maintained fixed to the cup body by means of the cup cover. With the limit ring being fixed to the cup body by means of the cup cover, there is no need to provide a connecting structure between the limit ring and the cup body, therefore simplifying the structure.

According to an embodiment of the present invention, the cup body further comprises a protruding portion that protrudes from the inner wall, the limit ring comprises a depressed portion that cooperates with the protruding portion, and the cup cover presses upon the limit ring. Thus, the limit ring is supported from below by the protruding portion and pressed from above by the cup cover, so that the limit ring is clamped between the cup body and the cup cover, reducing the difficulty of mounting and dismounting the cup body and the limit ring and simplifying the structure of the food processor for cleaning.

A food processor, comprising:
- a host; and
- the cleaning cup of any embodiment above, the cleaning cup being detachably assembled to the host.

The technical solutions provided by the present invention can achieve the following beneficial effects:
The present invention provides a cleaning cup of a food processor and a food processor, wherein, the limit ring comprises the top limit portion and the lateral limit portion, the top limit portion limiting the amount of upward movement of the rotating basket, and the lateral limit portion limiting the amount of lateral movement of the rotating basket. It can be seen that, by providing the limit ring, the amount of vertical and lateral movement of the rotating basket caused by a centrifugal force can be reduced, so that the rotating basket stably rotates around a rotary axe, thereby improving the dewatering effect and reducing the residual moisture in the cleaned food materials.

### Description of Figures

Fig. 1 is a schematic view of a food processor according to an exemplary embodiment of the present invention with part of its structure removed;
Fig. 2 is a schematic view of the cleaning cup in a food processor according to an exemplary embodiment of the present invention;
Fig. 3 is a sectional view of the cleaning cup in a food processor according to an exemplary embodiment of the present invention;
Fig. 4 is an enlarged view of part A in Fig. 3;
Fig. 5 is an exploded view of a food processor according to an exemplary embodiment of the present invention;
Fig. 6 is a schematic view of the limit ring in Fig. 5;
Fig. 7 is a sectional view of the limit ring in Fig. 5;
Fig. 8 is a schematic view of a rotating basket according to an exemplary embodiment of the present invention;
Fig. 9 is a sectional view of the rotating basket in Fig. 8.

### Description of Embodiments

Exemplary embodiments will be described in detail herein, examples of which are illustrated in the accompanying drawings. When the following description refers to the drawings, the same references in different drawings represent the same or similar elements, unless otherwise indicated. The modes of realization described in the illustrative exemplary embodiments below do not represent all modes of realization consistent with the present invention. Rather, they are merely examples of devices and methods consistent with some aspects of the present invention as recited in the appended claims.

The terminology used in the present application is for the purpose of describing particular embodiments only and is not intended to limit the present invention. Unless otherwise defined, technical or scientific terms used in the present application shall have the ordinary meaning as understood by those of ordinary skill in the art to which the present invention belongs. The terms "first", "second" and similar terms used in the description and claims of the present application do not denote any order, quantity, or importance, but are only used to distinguish different components. Likewise, "a" or "an" and the like do not denote a quantitative limitation, but rather denote the presence of at least one. "A plurality of" or "several" means two or more. Unless otherwise indicated, the terms "front", "rear", "lower" and/or "upper", "top", "bottom" and the like are for convenience of description only and are not limited to one position or one spatial orientation. Words like "include" or "comprise" mean that the elements or items appearing before "including" or "including" cover the elements or items listed after "include" or "comprise" and their equivalents, and do not exclude other elements or object. "Connected" or "connection" and similar words are not limited to physical or mechanical connections, but may include electrical connections, whether direct or indirect.

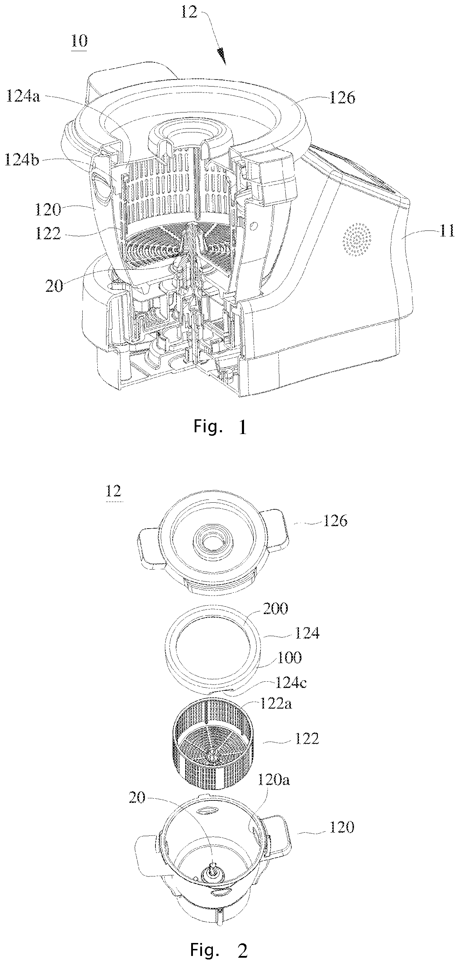

In reference to Figs. 1 and 2, Fig. 1 shows a schematic view of a food processor according to an exemplary embodiment of the present invention with part of its structure removed; Fig. 2 shows an exploded view of the cleaning cup in the food processor according to an exemplary embodiment of the present invention.

The food processor 10 according to the present invention comprises a host 22 and a cleaning cup 12 detachably assembled to the host 11. In this embodiment, the host 11 is provided at the bottom of the cleaning cup 12 and comprises a motor, an output shaft of the motor extending out of the host 11.

The cleaning cup 12 comprises a cup body 120, a rotating basket 122, a limit ring 124, and a cup cover 126. In this embodiment, the cup body 120 is seated on the host 11 and maintained fixed relative to the host 11. The rotating basket 122 is rotatably provided in the cup body 120 and is connected with the output shaft of the motor via an upper connector 20. When driven by the motor, the rotating basket 122 can rotate relative to the cup body 120. The rotating basket 122 is used for receiving food materials. Water outlet holes 122a are provided on an outer wall of the rotating basket 122. During the course of cleaning the food materials, water remaining on the food material can flow out via the water outlet holes 122a under a centrifugal force during the rotation of the rotating basket 122.

The limit ring 124 is used for limiting the amount of movement of the rotating basket 122 under the effect of the centrifugal force. The limit ring 124 comprises a top limit portion 124a and a lateral limit portion 124b, wherein the top limit portion 124a is used for limiting the amount of upward movement of the rotating basket 122, and the lateral limit portion 124b is used for limiting the amount of lateral movement of the rotating basket 122.

Specifically, the limit ring 124 comprises a cylindrical side wall 100 and a ring-shaped top wall 200 fitted to the upper end face of the cylindrical side wall 100. In this embodiment, the ring-shaped top wall 200 forms the top limit portion 124a and is located above the rotating basket 122, and the cylindrical side wall forms the lateral limit portion 124b and surrounds the rotating basked 122.

The limit ring 124 is fixed relative to the cup body 120 by means of any suitable fixing mode. For example, the limit ring 124 can be fitted to the cup body 120 in a snap-fit manner. In the present example, the limit ring 124 is maintained fixed relative to the cup body 120 by means of the cup cover 126. In an embodiment, the limit ring 124 can be fixed to the cup cover 126. When the cup cover 126 covers the cup body 120, the limit ring 124 is fixed relative to the cup body 120.

In the present example, the cup body 120 comprises a protrusion 120a protruding inward, and the limit ring 124 comprises a depression 124c. The depression 124c and the protrusion 120a cooperate with each other so that the limit ring 124 is fitted to the cup body 120 by overlap joint. The cup cover 126 covers an opening of the cup body 120, and presses the limit ring 124 from above. Thus, it can be seen that when the cup cover 126 covers the cup body 120, the limit ring 124 is clamped between the protrusion 120a of the cup body 120 and the cup cover 126, thus achieving the fixation of the limit ring 124 relative to the cup body 120. To take the limit ring 124 out of the cup body 120, one only need to remove the cup cover 126, thereby facilitating the dismounting.

In the above-described example, the number of the protrusion 120a is not limited. In the present example, there are four protrusions 120a spaced apart by 90° one after another, and the depressions 124c are provided to form a one-to-one correspondence with each protrusion 120a.

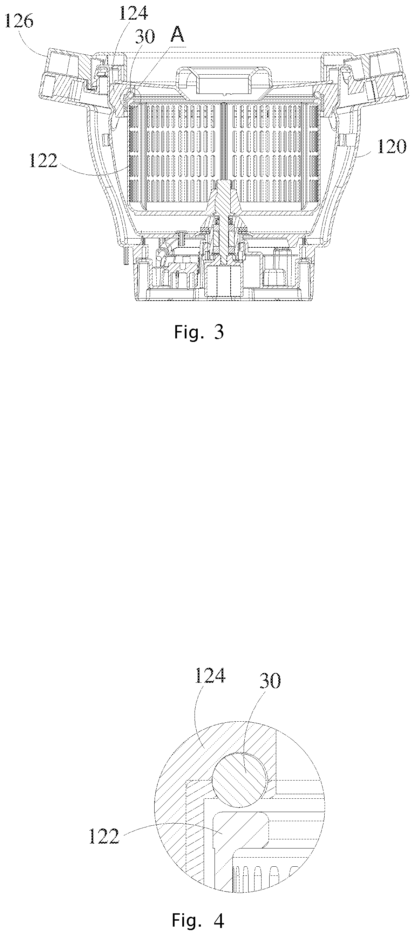

Now refer to Figs. 3 and 4, wherein Fig. 3 shows a sectional view of the cup body in a cleaning food processor according to an exemplary embodiment of the present invention; Fig. 4 shows an enlarged view of part A in Fig. 3.

Since the limit ring 124 is arranged in the immediate proximity of the rotating basket 122, the centrifugal force received by the rotating basket 122 during rotation will cause the rotating basket 122 to frequently come into contact with the top limit portion 124a and the lateral limit portion 124b. In order to reduce the friction when the rotating basket 122 comes into contact with the top limit portion 124a, in an embodiment of the present invention, the top limit portion 124a comprises a protrusion 30 which protrudes from the bottom face of the top limit portion 124a and is used to limit the position of the rotating basket 122 by contact. As the protrusion 30 reduces the area of contact between the top limit portion 124a and the rotating basket 122 and thus reduces the friction between the rotating basket 122 and the top limit portion 124a when they come into contact, effective work of the motor is increased.

It can be envisioned that the lateral limit portion 124b may also comprise a protrusion protruding from the inner surface of the lateral limit portion 124b. Thus, the friction between the rotating basket 122 and the lateral limit portion 124b can be reduced when the rotating basket 122 moves left and right.

The number of the protrusion 30 is not limited. In the present example, four protrusions 30 spaced apart by 90° one after another are provided.

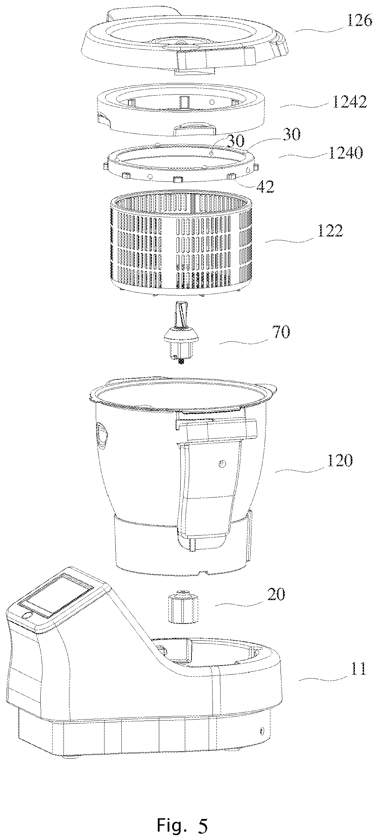

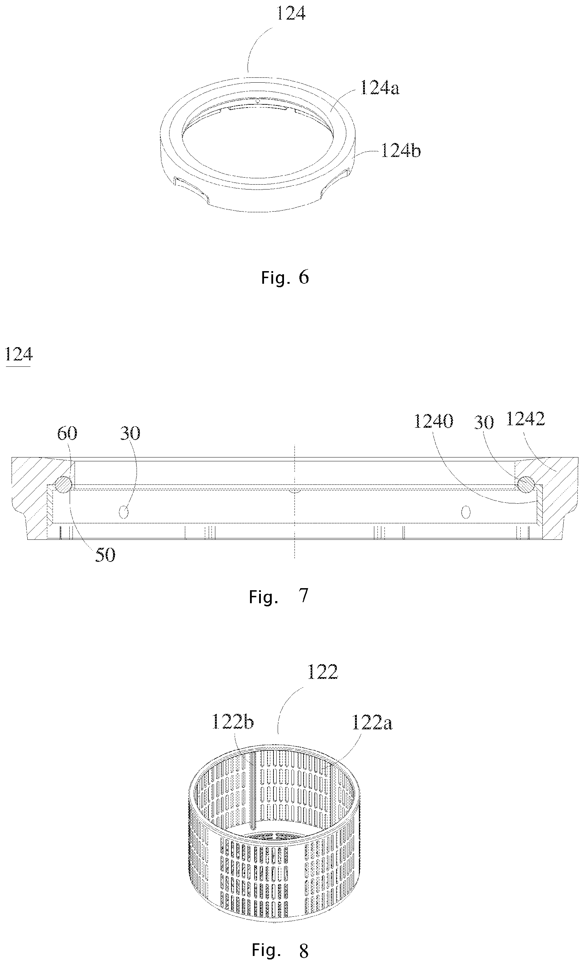

Now refer to Figs. 5 to 7, wherein Fig. 5 shows an exploded view of a food processor according to an exemplary embodiment of the present invention; Fig. 6 shows a schematic assembled view of the limit ring in Fig. 5, and Fig. 7 shows a sectional view of the limit ring in Fig. 5.

In the embodiment shown in Figs. 5 to 7, the limit ring 124 comprises an inner ring 1240 and an outer ring 1242 connected with each other, as well as a sphere. The inner ring 1240 is sleeved at the inner side of the outer ring 1242, and they can be maintained fixed relative to each other by a screw connection, without being limited thereto.

The sphere is clamped between the inner ring 1240 and the outer ring 1242. The inner ring 1240 is provided with a through hole 50 through which the sphere protrudes and comes into contact with the rotating basket 122, thereby forming the protrusion 30. In this solution, on one hand, the limit ring 124 is of a multi-part structure wherein the sphere is clamped between the inner ring 1240 and the outer ring 1242 by the assembly of the inner ring 1240 and the outer ring 1242, reducing the difficulty of mounting the sphere; on the other hand, with the sphere as the protrusion 30, the contact between the sphere and the rotating basket 122 is a point contact when the top limit portion 124a and the lateral limit portion 124b come into contact with the rotating basket 122, further reducing the area of contact and thus further reducing the friction.

In an optional example, in order to ensure the stability of the sphere clamped between the inner ring 1240 and the outer ring 1242, the outer ring 1242 further comprises a depression 60 which directly faces the through hole 50, the depression 60 and the through hole 50 together forming an accommodating chamber that accommodates the sphere. Considering the shape of the sphere, the depression 60 is shaped as a half sphere, and the through hole 50 is a hole with a spherical face. The sphere protrudes from the through hole 50 to be exposed outside.

Further, in order to increase the degree of freedom of the sphere, the sphere is clearance fitted to the accommodating chamber. In this way, the contact between the sphere and the rotating basket 122 is changed from a sliding friction to a rolling friction, which further reduces the friction upon contact.

Based on the example shown in Figs. 5 to 7 wherein a sphere is provided in the top limit portion 124a, it can be easily understood that the same embodiment as described above can be adopted for the lateral limit portion 124b, which is thus not described further here.

Still in reference to Fig. 5, the limit ring 124 further comprises a positioning structure. The inner ring 1240 is positioning fitted to the outer ring 1242 by means of the positioning structure, so as to ensure the correct mounting position between the two and thus ensure that the depression 60 and the through hole 50 directly face each other.

In an embodiment, the positioning structure comprises a boss 42 located on one of the inner ring 1240 and the outer ring 1242 and a slot (not illustrated in the figures) located on the other of the inner ring 1240 and the outer ring 1242. When the inner ring 1240 and the outer ring 1242 are assembled, the boss 42 is inserted into the slot, so as to achieve the positioning and mounting between the two in the circumferential direction.

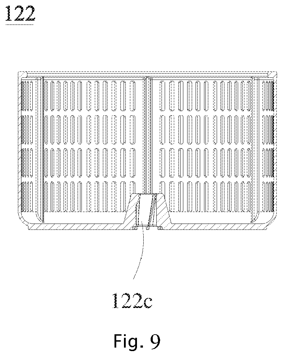

Now refer to Figs. 8 and 9, wherein Fig. 8 shows a schematic view of a rotating basket according to an exemplary embodiment of the present invention; Fig. 9 shows a sectional view of the rotating basket in Fig. 8.

In order to facilitate the dewatering of food materials, the outer wall of the rotating basket 122 is provided with a plurality of sets of water outlet holes 122a, each set of water outlet holes 122a comprising a plurality of oblong holes arranged vertically and horizontally. In addition, in order to reinforce the rotating basket 122, adjacent sets of water outlet holes 122a are spaced apart by a distance where a reinforcing rib 122b is provided.

The bottom of the rotating basket 122 is provided with a connecting hole 122c for inserting a connecting shaft 70 (see Fig. 5), the lower end of which is drivingly connected with the upper connector 20.

What have been described above are only preferred embodiments of the present invention, and are not intended to limit the present invention. Any modifications, equivalent replacements, improvements, etc. made within the spirit and principles of the present invention shall fall within the protection scope of the present application.

## Claims

1. A cleaning cup of a food processor, comprising:
- a cup body (120);
- a rotating basket (122) rotatably arranged in the cup body (120) and used for receiving food materials, water outlet holes (122a) being provided on an outer wall of the rotating basket (122); and
- a limit ring (124) fixed relative to the cup body (120), the limit ring (124) comprising a top limit portion (124a) and a lateral limit portion (124b), the top limit portion (124a) limiting the movement amount when the rotating basket (122) moves upwards, and the lateral limit portion (124b) limiting the movement amount when the rotating basket (122) moves left and right.

2. The cleaning cup of a food processor of claim 1, **characterized in that**, at least one of the top limit portion (124a) and the lateral limit portion (124b) comprises a protrusion (30) that limits the position of the rotating basket (122) by contact.

3. The cleaning cup of a food processor of claim 2, **characterized in that**, the limit ring (124) comprises an inner ring (1240) and an outer ring (1242) fixed together, and a sphere clamped between the inner ring (1240) and the outer ring (1242), the inner ring (1240) being provided with a through hole (50) through which the sphere protrudes, forming the protrusion (30).

4. The cleaning cup of a food processor of claim 3, **characterized in that**, the outer ring (1242) further comprises a depression (60) directly facing the through hole (50), the depression (60) and the through hole (50) together forming an accommodating chamber that accommodates the sphere.

5. The cleaning cup of a food processor of claim 4, **characterized in that**, the sphere is clearance fitted to the accommodating chamber.

6. The cleaning cup of a food processor of claim 3, **characterized in that**, the limit ring (124) further comprises a positioning structure by means of which the inner ring (1240) and the outer ring (1242) are positioning fitted.

7. The cleaning cup of a food processor of claim 6, **characterized in that**, the positioning structure comprises a boss (42) located on one of the inner ring (1240) and the outer ring (1242) and a slot located on the other of the inner ring (1240) and the outer ring (1242), the boss (42) being inserted into the slot.

8. The cleaning cup of a food processor of any one of claims 1 to 7, **characterized in that**, the cleaning cup (12) further comprises a cup cover (126) that covers an opening of the cup body (120), the limit ring (124) being maintained fixed to the cup body (120) by means of the cup cover (126).

9. The cleaning cup of a food processor of claim 8, **characterized in that**, the cup body (120) further comprises a protruding portion (120a) that protrudes from the inner wall, the limit ring (124) comprises a depressed portion (124c) that cooperates with the protruding portion (120a), and the cup cover (126) presses upon the limit ring (124).

10. A food processor, **characterized in that**, it comprises:
- a host (11); and
- the cleaning cup (12) of any one of claims 1 to 9, the cleaning cup (12) being detachably assembled to the host (11).
